# EUROPEAN PATENT APPLICATION

(11) **EP 4 745 104 A1**
(43) Date of publication of application: **20.05.2026**
(21) Application number: 24853670.8
(22) Date of filing: 09.08.2024
(51) Int. Cl.: C03C 17/36, C03C 27/06, B32B 17/10, B32B 7/12

(54) **COATED GLASS AND PREPARATION METHOD THEREFOR, AND LAMINATED GLASS**

(30) Priority: 11.08.2023 CN 202311017339
(71) Applicant: Fuyao Glass Industry Group Co., Ltd., Fuqing, Fujian 350300 (CN)
(72) Inventor: TSO, Fai, Fuqing Fujian 350300 (CN); ZHANG, Jielin, Fuqing Fujian 350300 (CN); LU, Guoshui, Fuqing Fujian 350300 (CN); CHEN, Guofu, Fuqing Fujian 350300 (CN); WANG, Zelong, Fuqing Fujian 350300 (CN); FUKUHARA, Kohta, Fuqing Fujian 350300 (CN)
(74) Representative: Mewburn Ellis LLP
(86) International application number: PCT/CN2024/110883
(87) International publication number: WO 2025/036260

(57) **Abstract**

The disclosure provides a coated glass and a manufacturing method therefor, and a laminated glass. The coated glass includes a first substrate and a coated structure. The coated structure is disposed on at least one surface of the first substrate, and the coated structure comprises at least one functional stacked layer and at least one ZrOₓ layer. Each functional stacked layer includes a metal layer and two dielectric layers, the metal layer is located between the two dielectric layers, and a ZrOₓ layer is located on one side of a dielectric layer away from the metal layer, where x satisfies 1 < x ≤ 2, and a refractive index n of each of the at least one ZrOₓ layer satisfies 2.00 ≤ n ≤ 2.18. The technical solution provided in the disclosure can improve the hardness of the coated structure in the coated glass, thereby improving the scratch resistance and workability of the coated glass.

## Description

This application claims priority to Chinese Patent Application No. 202311017339.8, filed August 11, 2023, and entitled "COATED GLASS AND PREPARATION METHOD THEREFOR, AND LAMINATED GLASS", the entire disclosure of which is incorporated herein by reference.

### TECHNICAL FIELD

The present disclosure relates to the field of glass technology, and in particular, to a coated glass and a manufacturing method therefor, and a laminated glass.

### BACKGROUND

A coated glass refers to a glass that has a coating or a film layer with specific functions formed on a surface of a glass substrate using vapor deposition technology. The vapor deposition technology includes chemical vapor deposition (CVD) and physical vapor deposition (PVD). In practical applications, a coated glass including 1 - 4 silver layers can be manufactured using the PVD technology. Since the silver layer has characteristics such as infrared reflection and good electrical conductivity, a coated glass including the silver layer can be used as heat-insulating glass or electrically-heated glass. When the heat-insulating glass is mounted on a vehicle, it can prevent lights other than visible lights in sunlight, particularly infrared rays, from entering the interior space, thereby significantly reducing the energy consumption of an air conditioning and improving the thermal comfort of the driver and passengers. For the electrically-heated glass, as the electrical current passes, temperature of the electrically-heat glass increases, thereby implementing functions such as de-fogging, defrosting, de-icing, and preventing frogging, so that the driving safety is improved.

A high-temperature heat treatment of at least 500°C and a bending process, for example, the hot bending process or the press bending process for manufacturing the vehicle glass, need to be performed on the coated glass when the coated glass is manufactured into the heat-insulating glass or the electrically-heated glass on a motor vehicle. In this case, coatings or film layers on the coated glass are required to not only meet the requirements for optical performance and appearance quality, but also have a high mechanical performance, thermal stability, and chemical stability. The mechanical performance of the conventional coated glass including silver layers is relatively poor, especially for coated glass with 3 - 4 silver layers. The coated glass with 3 - 4 silver layers has relatively low hardness, making it prone to being scratched by hard objects during transportation, storage, handling, and processing, leading to poor workability.

### SUMMARY

The disclosure provides a coated glass and a preparation method therefor, and a laminated glass, which can improve the hardness of a coated structure of the coated glass, thereby improving the scratch resistance and the workability of the coated glass.

In a first aspect, the disclosure provides a coated glass. The coated glass includes a first substrate and a coated structure. The coated structure is disposed on at least one surface of the first substrate, and the coated structure includes at least one functional stacked layer and at least one ZrOₓ layer. Each functional stacked layer includes a metal layer and two dielectric layers, the metal layer is located between the two dielectric layers, and a ZrOₓ layer is located on one side of a dielectric layer away from the metal layer, where x satisfies 1 < x ≤ 2, and a refractive index *n* of each of the at least one ZrOₓ layer satisfies 2.00 ≤ *n* ≤ 2.18.

It may be understood that, the ZrOₓ layer provided in the disclosure has a refractive index *n* satisfying 2.00 ≤ *n* ≤ 2.18. In the disclosure, the ZrOₓ layer having a refractive index *n* satisfying 2.00 ≤ *n* ≤ 2.18 can improve the hardness of the coated structure, thereby improving the scratch resistance and the workability of the coated glass. In this way, the coated glass may be prevented from being scratched by hard objects during subsequent transportation, storage, handling, and processing.

In a possible embodiment, a pencil hardness of the coated structure is greater than or equal to 9H.

In a possible embodiment, a material of the metal layer is selected from any one metal or any one metal alloy of silver (Ag), aurum (Au), copper (Cu), aluminum (Al), or platinum (Pt), and a physical thickness of the metal layer ranges from 5nm to 20nm.

In a possible embodiment, a material of the dielectric layer is selected from any one metal or any one metal alloy oxide of zinc (Zn), magnesium (Mg), tin (Sn), titanium (Ti), niobium (Nb), zirconium (Zr), nickel (Ni), indium (In), aluminum (Al), cerium (Ce), tungsten (W), molybdenum (Mo), antimony (Sb), bismuth (Bi), and a physical thickness of the dielectric layer ranges from 5nm to 30nm.

In a possible embodiment, the coated structure includes an innermost adhesive layer, a first functional stacked layer, and an outermost protective layer stacked in sequence. At least one of the innermost adhesive layer or the outermost protective layer includes the ZrOₓ layer.

In a possible embodiment, the coated structure includes an innermost adhesive layer, a first functional stacked layer, a first intermediate layer, a second functional stacked layer, and an outermost protective layer stacked in sequence. At least one of the innermost adhesive layer, the first intermediate layer, or the outermost protective layer includes the ZrOₓ layer.

In a possible embodiment, the coated structure includes an innermost adhesive layer, a first functional stacked layer, a first intermediate layer, a second functional stacked layer, a second intermediate layer, a third functional stacked layer, and an outermost protective layer stacked in sequence. At least one of the innermost adhesive layer, the first intermediate layer, the second intermediate layer, or the outermost protective layer includes the ZrOₓ layer.

In a possible embodiment, the coated structure includes an innermost adhesive layer, a first functional stacked layer, a first intermediate layer, a second functional stacked layer, a second intermediate layer, a third functional stacked layer, a third intermediate layer, a fourth functional stacked layer, and an outermost protective layer stacked in sequence. At least one of the innermost adhesive layer, the first intermediate layer, the second intermediate layer, the third intermediate layer, or the outermost protective layer includes the ZrOₓ layer.

In a possible embodiment, the innermost adhesive layer includes the ZrOₓ layer with a physical thickness ranging from 10nm to 40nm.

In a possible embodiment, the outermost protective layer includes the ZrOₓ layer with a physical thickness ranging from 5nm to 35nm.

In a possible embodiment, at least one of the first intermediate layer, the second intermediate layer, or the third intermediate layer includes the ZrOₓ layer with a physical thickness ranging from 30nm to 70nm.

In a possible embodiment, a specific structure of the outermost protective layer is: TiOₓ layer/ZnSnOₓ layer/ZrOₓ layer.

In a possible embodiment, an extinction coefficient k of the ZrOₓ layer is less than or equal to 0.0001.

In a second aspect, the disclosure provides a laminated glass. The laminated glass includes a second substrate, an adhesive layer, and the coated glass described above, where the adhesive layer is connected between the second substrate and the coated glass, and the coated structure is located between the first substrate and the second substrate.

In a possible embodiment, the first substrate is clear glass or ultra-clear glass, a total iron content of the clear glass is less than or equal to 0.1%, and a visible light transmittance of the clear glass is greater than or equal to 80%. A total iron content of the ultra-clear glass is less than or equal to 0.015%, and a visible light transmittance of the ultra-clear glass is greater than or equal to 90%.

In a third aspect, the disclosure provides a manufacturing method for a coated glass. The method includes the following. A first substrate is provided. A coated structure is formed on at least one surface of the first substrate through magnetron sputtering. The coated structure includes at least one functional stacked layer and at least one ZrOₓ layer. Each functional stacked layer includes a metal layer and two dielectric layers, the metal layer is located between the two dielectric layers, and any of the at least one ZrOₓ layer is located on one side of a dielectric layer away from the metal layer, where x satisfies 1 < x ≤ 2, and a refractive index *n* of each of the at least one ZrOₓ layer satisfies 2.00 ≤ *n* ≤ 2.18.

In a possible embodiment, a target power for magnetron sputtering the ZrOₓ layer is a high power impulse magnetron sputtering (HiPIMS) power, and a target material for magnetron sputtering the ZrOₓ layer is a ZrO_{y} ceramic target, where y satisfies 1.4 ≤ y < 2.

### BRIEF DESCRIPTION OF THE DRAWINGS

In order to illustrate technical solutions of embodiments of the disclosure more clearly, accompanying drawings required for embodiments of the disclosure will be described in the following.
FIG. 1 is a schematic structural view of a laminated glass provided in an embodiment of the disclosure.
FIG. 2 is a schematic cross-sectional structural view of a coated glass illustrated in FIG. 1 provided in a first embodiment of the disclosure.
FIG. 3 is a schematic cross-sectional structural view of a coated glass illustrated in FIG. 1 provided in a second embodiment of the disclosure.
FIG. 4 is a schematic cross-sectional structural view of a coated glass illustrated in FIG. 1 provided in a third embodiment of the disclosure.
FIG. 5 is a schematic cross-sectional structural view of a coated glass illustrated in FIG. 1 provided in a fourth embodiment of the disclosure.
FIG. 6 is a flow chart of a manufacturing method for a coated glass provided in an embodiment of the disclosure.

### DETAILED DESCRIPTION

For ease of understanding, terms involved in embodiments of the present disclosure are first explained.

"And/or" is only an association relationship for describing associated objects and represents that three relationships may exist. For example, A and/or B may represent the following three cases: A exists only, both A and B exist, and B exists only.

"Multiple" means two or more than two.

"Connect" should be understood in a broader sense. For example, "A is connected to B" may mean that A and B are in a direct connection or in an indirect connection through a medium.

Values of x and y in chemical formulas are subject to a defined range if there is a clear definition for the values. If there is no clear definition for the values, the values of x and y may be determined according to the stoichiometric, sub-stoichiometric, or super-stoichiometric deposition in the magnetron sputtering process.

"High-temperature heat treatment" refers to a high-temperature heat treatment of at least 500°C, for example, the self-weight bending process or the press bending process for manufacturing the vehicle glass.

The following will clearly describe specific embodiments of the disclosure with reference to the accompanying drawings.

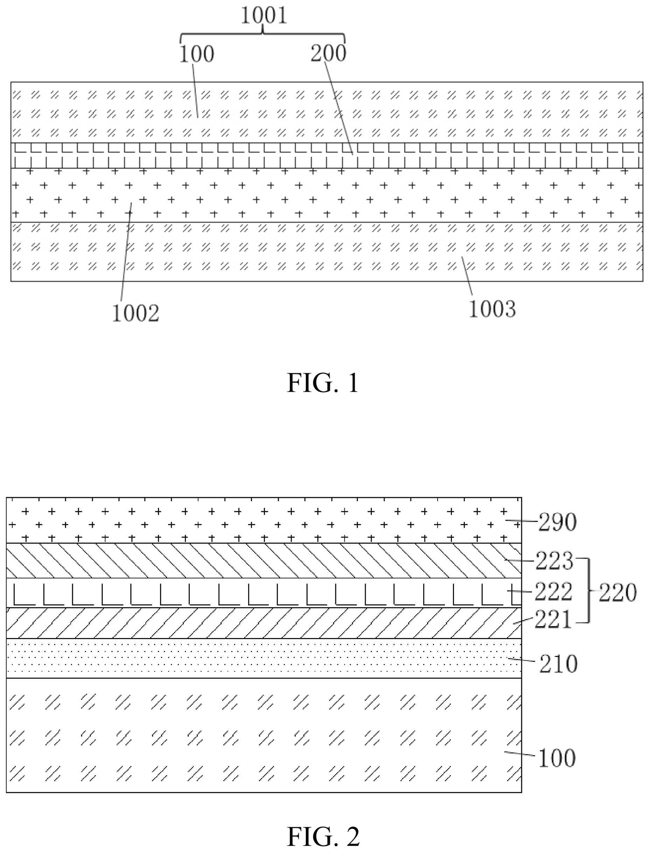

Reference is made to FIG. 1, which is a schematic structural view of a laminated glass 1000 provided in an embodiment of the disclosure. The laminated glass 1000 includes a coated glass 1001, an adhesive layer 1002, and a second substrate 1003. The adhesive layer 1002 is connected between the second substrate 1003 and the coated glass 1001. The coated glass 1001 includes a first substrate 100 and a coated structure 200. The coated structure 200 is disposed on at least one surface of the first substrate 100. Exemplarily, the coated structure 200 is located between the first substrate 100 and the second substrate 1003. That is, one side of the first substrate 100 with the coated structure 200 is connected to the adhesive layer 1002. The pencil hardness of the coated structure 200 is greater than or equal to 9H, so that the scratch resistance and the workability of the coated glass 1001 may be improved.

It may be noted that, FIG. 1 only provides a schematic description of the connection relationship between the coated glass 1001, the adhesive layer 1002, and the second substrate 1003, and is not intended to specifically limit the connection positions, specific structures, and quantities of each device. The structure shown in embodiments of the disclosure does not constitute a specific limitation on the laminated glass 1000. In some other embodiments of the disclosure, the laminated glass 1000 may include more or fewer components than those illustrated in FIG. 1, or combine some components, or split some components, or have different component arrangements. The components illustrated in FIG. 1 may be implemented by hardware, software, or a combination of software and hardware.

In the disclosure, the laminated glass 1000 may be mounted on a vehicle as a windshield glass, a side window glass, a rear windshield glass, or a sunroof glass, etc. The coated structure 200 includes at least one functional stacked layer and at least one ZrOₓ layer. Each functional stacked layer includes a metal layer and two dielectric layers, and the metal layer is located between the two dielectric layers. Any of the at least one ZrOₓ layer is not in direct contact with any metal layer. That is, the ZrOₓ layer is located on one side of the dielectric layer away from the metal layer, and at least one dielectric layer is disposed between any of the at least one ZrOₓ layer and the metal layer nearest to the ZrOₓ layer, where x satisfies 1 < x ≤ 2, and a refractive index *n* of each of the at least one ZrOₓ layer satisfies 2.00 ≤ *n* ≤ 2.18. The metal layer, the dielectric layer, and the ZrOₓ layer may be respectively formed through magnetron sputtering.

The metal layer has characteristics such as infrared reflection and good electrical conductivity. With the coated structure 200 including the metal layer, the coated glass 1001 and the laminated glass 1000 may possess a heat-insulating function, thereby significantly reducing the energy consumption of an air conditioning and improving the thermal comfort of the driver and passengers. According to the need of practical application, the number of the metal layer in the coated structure 200 may be one, two, three, four, five, or more. In a possible embodiment, the coated structure 200 can also be used as a transparent conductive film, and in this case, the laminated glass 1000 has an electrically-heated function after the laminated glass 1000 is powered on. Therefore, the temperature of the laminated glass 1000 may be increased, thereby implementing functions such as de-fogging, defrosting, de-icing, and preventing frogging, so that the driving safety is improved. Exemplarily, the operating voltage for the laminated glass 1000 may range from 12V to 380V. The material of the metal layer may be selected from any one metal or any one metal alloy of Ag, Au, Cu, Al, or Pt, with specific examples including Ag, AgCu alloys, AgIn alloys, etc. The physical thickness of the metal layer may range from 5nm to 20nm. The material of the dielectric layer may be selected from at least one metal or metal oxide of Zn, Mg, Sn, Ti, Nb, Zr, Ni, In, Al, Ce, W, Mo, Sb, or Bi, with specific examples including aluminum-doped zinc oxide (AZO), NbOₓ, TiOₓ, ZnAlOₓ, ZnOₓ, SnOₓ, ZnSnOₓ, etc. The physical thickness of the dielectric layer may range from 5nm to 30nm. In some embodiments, a barrier layer (not illustrated) may be deposited between the metal layer and any dielectric layer. The material of the barrier layer is Ti, NiCr, Nb, etc. The barrier layer has a physical thickness less than or equal to 5nm. The barrier layer is in direct contact with the metal layer, and the main purpose of the barrier layer is to prevent the metal layer from reacting with oxidizing gases during magnetron sputtering and to improve the optical performance of the coated structure 200.

Both the first substrate 100 and the second substrate 1003 may be clear glass or ultra-clear glass (ultra-white glass). A total content of iron in the clear glass is less than or equal to 0.1%, and the visible light transmittance of the clear glass is greater than or equal to 80%. In the ultra-clear glass, the content of iron oxide (Fe₂O₃) is low, and the visible light transmittance of the ultra-clear glass is greater than or equal to 90%. The first substrate 100 and the second substrate 1003 may contain 0 - 0.1% of Fe₂O₃ by weight percentage. For example, the content of Fe₂O₃ in the first substrate 100 and the second substrate 1003 may be less than or equal to 0.09%, 0.08%, 0.07%, 0.05%, 0.04%, 0.03%, 0.02%, 0.015%, or 0.01%. The first substrate 100 and the second substrate 1003 may even be substantially Fe₂O₃-free. For example, the first substrate 100 and the second substrate 1003 may be soda-lime-silica ultra-clear glass, borosilicate glass, high-aluminum glass, etc.

The adhesive layer 1002 is used to connect the first substrate 100 and the second substrate 1003, so as to improve the structural strength of the laminated glass 1000 and ensure that the laminated glass 1000 meets safety standards and regulatory requirements for more application scenarios. The material of the adhesive layer 1002 may be polyvinyl butyral (PVB), ethylene vinyl acetate (EVA), thermoplastic polyurethane elastomer (TPU), or an ionic polymer film (e.g., SentryGlas^{®} Plus (SGP)), etc. Exemplarily, the adhesive layer 1002 may be of a single-layer structure or a multi-layer structure. The multi-layer structure may include, for example, a double-layer structure, a triple-layer structure, a quadruple-layer structure, a quintuple-layer structure, etc. The adhesive layer 1002 may possess other functions. For example, at least one tinted region is provided as a shadow band to reduce sunlight interference to the human eye, or an infrared absorber is added for sun protection or heat insulation, or an ultraviolet absorber is added for ultraviolet insulation, or at least one layer in the multi-layer structure has a higher content of a plasticizer for sound insulation.

In a first possible embodiment, reference is made to FIG. 2, which is a schematic cross-sectional structural view of a coated glass 1001 illustrated in FIG. 1 provided in the first embodiment of the disclosure. The coated structure 200 only has one functional stacked layer, and specifically the coated structure 200 includes an innermost adhesive layer 210, a first functional stacked layer 220, and an outermost protective layer 290 stacked in sequence. At least one of the innermost adhesive layer 210 or the outermost protective layer 290 includes the ZrOₓ layer.

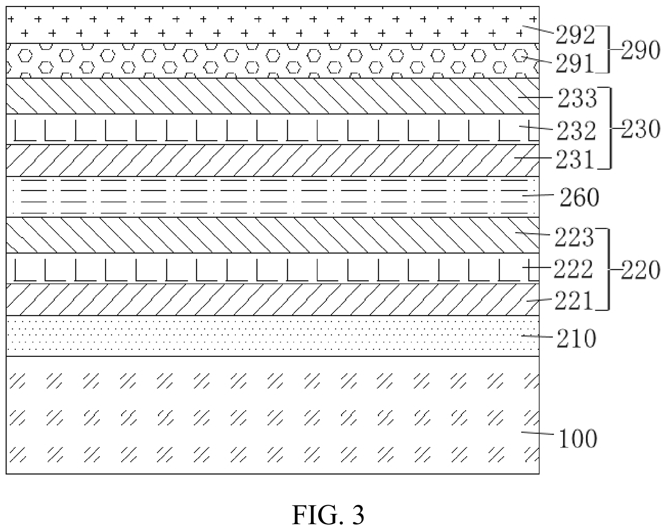

In a second possible embodiment, reference is made to FIG. 3, which is a schematic cross-sectional structural view of a coated glass illustrated in FIG. 1 provided in the second embodiment of the disclosure. The coated structure 200 has two functional stacked layers, and specifically the coated structure 200 includes an innermost adhesive layer 210, a first functional stacked layer 220, a first intermediate layer 260, a second functional stacked layer 230, and an outermost protective layer 290 stacked in sequence. At least one of the innermost adhesive layer 210, the first intermediate layer 260, or the outermost protective layer 290 includes the ZrOₓ layer.

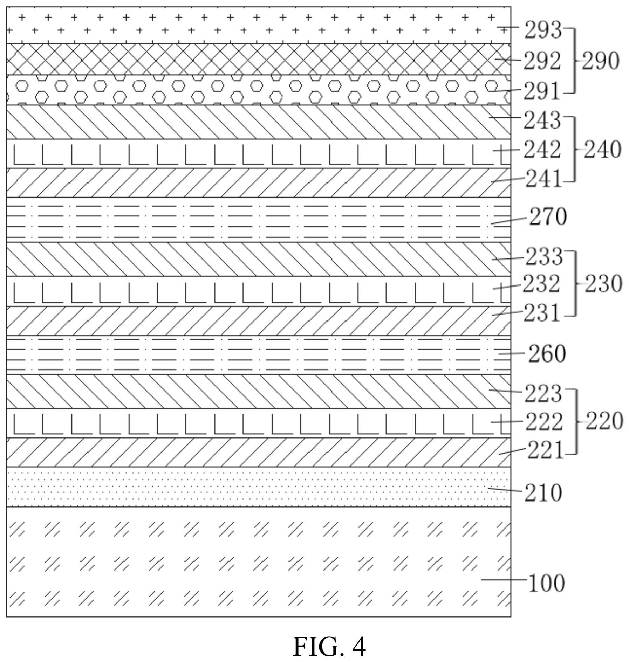

In a third possible embodiment, reference is made to FIG. 4, which is a schematic cross-sectional structural view of a coated glass illustrated in FIG. 1 provided in the third embodiment of the disclosure. The coated structure 200 has three functional stacked layers, and specifically the coated structure 200 includes an innermost adhesive layer 210, a first functional stacked layer 220, a first intermediate layer 260, a second functional stacked layer 230, a second intermediate layer 270, a third functional stacked layer 240, and an outermost protective layer 290 stacked in sequence. At least one of the innermost adhesive layer 210, the first intermediate layer 260, the second intermediate layer 270, or the outermost protective layer 290 includes the ZrOₓ layer.

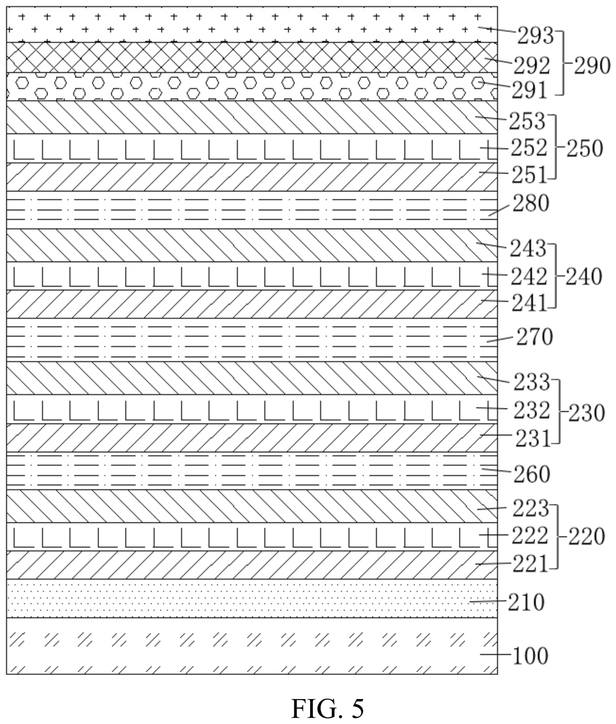

In a fourth possible embodiment, reference is made to FIG. 5, which is a schematic cross-sectional structural view of a coated glass illustrated in FIG. 1 provided in the fourth embodiment of the disclosure. The coated structure 200 has four functional stacked layers, and specifically the coated structure 200 includes an innermost adhesive layer 210, a first functional stacked layer 220, a first intermediate layer 260, a second functional stacked layer 230, a second intermediate layer 270, a third functional stacked layer 240, a third intermediate layer 280, a fourth functional stacked layer 250, and an outermost protective layer 290 stacked in sequence. At least one of the innermost adhesive layer 210, the first intermediate layer 260, the second intermediate layer 270, the third intermediate layer 280, or the outermost protective layer 290 includes the ZrOₓ layer.

In FIG. 2, FIG. 3, FIG. 4, and FIG. 5, the innermost adhesive layer 210 is directly deposited on the surface of the first substrate 100, so as to reduce or prevent alkali metal ions from diffusing into the coated structure 200 from the glass. It can also increase the adhesion between the coated structure 200 and the surface of the first substrate 100, and help adjust the mechanical performance, optical performance, and high-temperature heat treatment performance of the coated structure 200. The innermost adhesive layer 210 refers to all the film layers between the surface of the first substrate 100 and the first functional stacked layer 220. The innermost adhesive layer 210 may be a single-film layer or may be composed of multiple sub-film layers. In some embodiments, the innermost adhesive layer 210 may include a ZrOₓ layer with a physical thickness ranging from 10nm to 40nm. In other embodiments, the material of the innermost adhesive layer 210 may be selected from oxide, nitride, or oxynitride of at least one element of Si, Zn, Mg, Sn, Ti, Nb, Zr, Ni, In, Al, Ce, W, Mo, Sb, or Bi. For example, the material of the innermost adhesive layer 210 may be SiAlZrNₓ, NbOₓ, SiNₓ, ZnSnOₓ, SiZrNₓ, etc.

The first functional stacked layer 220 includes a first dielectric layer 221, a first metal layer 222, and a second dielectric layer 223 stacked in sequence. The first dielectric layer 221 is deposited on the innermost adhesive layer 210. The first dielectric layer 221 and the second dielectric layer 223 are mainly used to protect the first metal layer 222 from being damaged by alkali metal ions, oxygen, etc. The first dielectric layer 221 also serves as a crystallization seed layer for the first metal layer 222 to improve deposition density of the first metal layer 222. The second functional stacked layer 230 includes a third dielectric layer 231, a second metal layer 232, and a fourth dielectric layer 233 stacked in sequence. The third dielectric layer 231 and fourth dielectric layer 233 are mainly used to protect the second metal layer 232 from being damaged by alkali metal ions, oxygen, etc. The third dielectric layer 231 also serves as a crystallization seed layer for the second metal layer 232 to improve deposition density of the second metal layer 232. The third functional stacked layer 240 includes a fifth dielectric layer 241, a third metal layer 242, and a sixth dielectric layer 243 stacked in sequence. The fifth dielectric layer 241 and the sixth dielectric layer 243 are mainly used to protect the third metal layer 242 from being damaged by alkali metal ions, oxygen, etc. The fifth dielectric layer 241 also serves as a crystallization seed layer for the third metal layer 242 to improve deposition density of the third metal layer 242. The fourth functional stacked layer 250 includes a seventh dielectric layer 251, a fourth metal layer 252, and an eighth dielectric layer 253 stacked in sequence. The seventh dielectric layer 251 and the eighth dielectric layer 253 are mainly used to protect the fourth metal layer 252 from being damaged by alkali metal ions, oxygen, etc. The seventh dielectric layer 251 also serves as a crystallization seed layer for the fourth metal layer 252 to improve deposition density of the fourth metal layer 252.

In FIG. 3, FIG. 4, and FIG. 5, the coated structure 200 includes at least two functional stacked layers, with an intermediate layer disposed between two adjacent functional stacked layers, namely the first intermediate layer 260, the second intermediate layer 270, and the third intermediate layer 280. The first intermediate layer 260 is located between the second dielectric layer 223 and the third dielectric layer 231. The second intermediate layer 270 is located between the fourth dielectric layer 233 and the fifth dielectric layer 241. The third intermediate layer 280 is located between the sixth dielectric layer 243 and the seventh dielectric layer 251. These intermediate layers can improve the flatness of the coated structure 200 and the reflective color. These intermediate layers may be single-film layers or may be composed of multiple sub-film layers. In some embodiments, at least one of the first intermediate layer 260, the second intermediate layer 270, or the third intermediate layer 280 includes a ZrOₓ layer with a physical thickness ranging from 30nm to 70nm. The ZrOₓ layer has a high hardness, which can increase the hardness of the coated structure 200, thereby improving the scratch resistance and the workability of the coated glass. In other embodiments, the materials of the first intermediate layer 260, the second intermediate layer 270, and the third intermediate layer 280 may also be selected from oxides, nitrides, or oxynitrides of at least one element of Si, Zn, Mg, Sn, Ti, Nb, Zr, Ni, In, Al, Ce, W, Mo, Sb, or Bi. For example, the materials may be ZrNₓ, SiOₓ, SiOₓN_{y}, SiAlZrNₓ, SiZrNₓ, SiNₓ, SiZrOₓ, SiAlZrOₓ, ZnSnOₓ, AZO, indium tin oxide (ITO), etc.

In FIG. 2, FIG. 3, FIG. 4, and FIG. 5, the outermost protective layer 290 is deposited on an outer side of the functional stacked layer farthest from the first substrate 100. In FIG. 2, the outermost protective layer 290 is deposited on one side of the first functional stacked layer 220 farthest from the first substrate 100. In FIG. 3, the outermost protective layer 290 is deposited on one side of the second functional stacked layer 230 farthest from the first substrate 100. In FIG. 4, the outermost protective layer 290 is deposited on one side of the third functional stacked layer 240 farthest from the first substrate 100. In FIG. 5, the outermost protective layer 290 is deposited on one side of the fourth functional stacked layer 250 farthest from the first substrate 100. The outermost protective layer 290 is mainly used to protect the metal layer in the functional stacked layer from corrosion and mechanical damage, and also helps to adjust the mechanical performance, optical performance, and high-temperature heat treatment performance of the coated structure 200. The outermost protective layer 290 includes all the film layers on the outer side of the functional stacked layer farthest from the first substrate 100. The outermost protective layer 290 may be a single-film layer or may be composed of multiple sub-film layers. The thickness of the outermost protective layer 290 may range from 5nm to 70nm (including the endpoints 5nm and 70nm).

In some embodiments, the outermost protective layer 290 may include a ZrOₓ layer with a physical thickness ranging from 5nm to 35nm. In other embodiments, the material of the innermost adhesive layer 210 may also be selected from oxides, nitrides, or oxynitrides of at least one element of Si, Zn, Mg, Sn, Ti, Nb, Zr, Ni, In, Al, Ce, W, Mo, Sb, or Bi. For example, the material of the innermost adhesive layer 210 may be ZrNₓ, SiOₓ, SiOₓN_{y}, SiAlZrNₓ, SiZrNₓ, SiNₓ, SiZrOₓ, SiAlZrOₓ, etc.

In some embodiments, the outermost protective layer 290 includes three sub-film layers, and the specific structure may be a TiOₓ layer 291, a ZnSnOₓ layer 292, and a ZrOₓ layer 293 stacked in sequence. The physical thickness of the TiOₓ layer 291 is less than or equal to 20nm, and the physical thickness of the ZnSnOₓ layer 292 is less than or equal to 20nm. With the structure of the TiOₓ layer 291, the ZnSnOₓ layer 292, and the ZrOₓ layer 293 stacked in sequence, the coated structure 200 can have a better heat ductility, ensuring that the coated structure 200 does not crack during high-temperature heat treatment.

In other embodiments, the outermost protective layer 290 includes two sub-film layers, and the specific structure may be a TiOₓ layer 291 and a ZnSnOₓ layer 292 stacked in sequence. The physical thickness of the TiOₓ layer 291 is less than or equal to 20nm, and the physical thickness of the ZnSnOₓ layer 292 is less than or equal to 20nm.

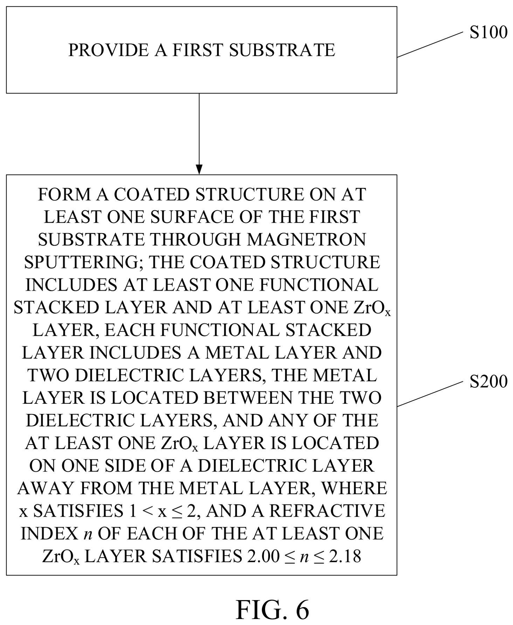

The disclosure further provides a manufacturing method for a coated glass 1001. Reference is made to FIG. 6, which is a flow chart of a manufacturing method for the coated glass 1001 provided in an embodiment of the disclosure. The method includes the following.

At S100, a first substrate 100 is provided.

At S200, a coated structure 200 is formed on at least one surface of the first substrate 100 through magnetron sputtering. The coated structure 200 includes at least one functional stacked layer and at least one ZrOₓ layer. Each functional stacked layer includes a metal layer and two dielectric layers, the metal layer is located between the two dielectric layers, and any of the at least one ZrOₓ layer is located on one side of a dielectric layer away from the metal layer, where x satisfies 1 < x ≤ 2, and a refractive index *n* of each of the at least one ZrOₓ layer satisfies 2.00 ≤ *n* ≤ 2.18 (including endpoints 2.00 and 2.18).

In the disclosure, the target power for magnetron sputtering the ZrOₓ layer is a high power impulse magnetron sputtering (HiPIMS) power, and the target material for magnetron sputtering the ZrOₓ layer is a ZrO_{y} ceramic target, where y satisfies 1.4 ≤ y < 2. The refractive index *n* of the ZrOₓ layer obtained by magnetron sputtering using the HiPIMS power satisfies *n* = 2.00 - 2.18, so that the obtained coated structure 200 has a pencil hardness greater than or equal to 9H. The refractive index *n* may be 2.00, 2.01, 2.02, 2.03, 2.04, 2.05, 2.06, 2.07, 2.08, 2.09, 2.10, 2.11, 2.12, 2.13, 2.14, 2.15, 2.16, 2.17, 2.18, etc. Preferably, the refractive index *n* of the ZrOₓ layer satisfies *n* = 2.05 - 2.15.

Comparative examples 1 to 6 and embodiments 1 to 12 are described in the following.

In the disclosure, clear glass substrates with the thickness of 2.1mm are prepared, and film layer structures of comparative examples 1 to 4 and embodiments 1 to 12 are respectively deposited on the surfaces of the clear glass substrates through magnetron sputtering. The pencil hardness of each of the coated glass test samples of comparative examples 1 to 3 and embodiments 1 to 12 before high-temperature heat treatment is measured, and the refractive index *n* and the extinction coefficient *k* of each of the ZrOₓ layers of comparative examples 2 to 4 and embodiments 1 to 12 after high-temperature heat treatment are measured. The measurement results are shown in table 1.

In comparative example 1, the clear glass substrate and an Ag layer are stacked in sequence.

In comparative example 2, the clear glass substrate, an Ag layer, and a diamond-like-carbon (DLC) layer are stacked in sequence, where the target material for magnetron sputtering the DLC layer is a graphite target, the process gas is Ar, the target power is the HiPIMS power, and the duty ratio ranges from 5% to 17%.

In comparative example 3, the clear glass substrate, an Ag layer, an AZO layer are stacked in sequence, where the target material for magnetron sputtering the AZO layer is an AZO ceramic target, the process gases are Ar and O₂, the target power is a medium frequency (MF) magnetron sputtering power, and the duty ratio is 100%.

In comparative examples 4 to 6, the clear glass substrate, an Ag layer, a ZrOₓ layer are stacked in sequence, where the target material for magnetron sputtering the ZrOₓ layer is a ZrO_{y} ceramic target (y = 1.4), the process gases are Ar and O₂, the target power is the MF magnetron sputtering power, and the duty ratio is 100%.

In embodiments 1 to 12, the clear glass substrate, an Ag layer, a ZrOₓ layer are stacked in sequence, where the target material for magnetron sputtering the ZrOₓ layer is a ZrO_{y} ceramic target (y = 1.4), the process gases are Ar and O₂, the target power is the HiPIMS power, and the duty ratio ranges from 5% to 17%.

For magnetron sputtering the Ag layers of comparative examples 1 to 6 and embodiments 1 to 12, the target material is sliver metal target, the process gas is Ar, and the target power is a direct-current (DC) power.

**Table 1: measurement results of coated glass test samples of comparative examples 1 to 6 and embodiments 1 to 12**

| Target power | | Duty ratio rate (nm*m/min) | Sputtering treatment | Before heat | After heat treatment | |
|---|---|---|---|---|---|---|
| | | | | Pencil hardness | Refractive index *n* | Extinction coefficient k |
| Comparative example 1 | DC | / | / | 4B | / | / |
| Comparative example 2 | HiPIMS | 5%-17% | / | 2H | 2.296 | 0.299 |
| Comparative example 3 | MF | 100% | / | HB | 1.976 | 0.00047 |
| Comparative example 4 | MF | 100% | 8.53 | 3B | 2.215 | 0.00534 |
| Comparative example 5 | MF | 100% | 7.03 | 6H | 2.232 | 0.00443 |
| Comparative example 6 | MF | 100% | 6.56 | 8H | 2.241 | 0.0054 |
| Embodiment 1 | HiPIMS | 5%-17% | 10.85 | >9H | 2.09 | 0.00004 |
| Embodiment 2 | HiPIMS | 5%-17% | 10.51 | >9H | 2.1 | 0.00004 |
| Embodiment 3 | HiPIMS | 5%-17% | 10.85 | >9H | 2.08 | <0.00001 |
| Embodiment 4 | HiPIMS | 5%-17% | 11.02 | >9H | 2.12 | <0.00001 |
| Embodiment 5 | HiPIMS | 5%-17% | 10.85 | >9H | 2.06 | 0.00002 |
| Embodiment 6 | HiPIMS | 5%-17% | 10.85 | >9H | 2.06 | 0.00003 |
| Embodiment 7 | HiPIMS | 5%-17% | 10.85 | >9H | 2.12 | <0.00001 |
| Embodiment 8 | HiPIMS | 5%-17% | 10.85 | >9H | 2.11 | <0.00001 |
| Embodiment 9 | HiPIMS | 5%-17% | 10.85 | >9H | 2.1 | 0.00003 |
| Embodiment 10 | HiPIMS | 5%-17% | 10.40 | >9H | 2.06 | 0.00002 |
| Embodiment 11 | HiPIMS | 5%-17% | 10.85 | >9H | 2.12 | <0.00001 |
| Embodiment 12 | HiPIMS | 5%-17% | 10.85 | >9H | 2.09 | <0.00001 |

As shown in table 1, the hardness of the Ag layer of comparative example 1 is relatively low. In comparative example 2, the hardness of the film layer is significantly improved by depositing the DLC layer (HiPIMS) on the Ag layer. In comparative example 3, the hardness of the film layer is not significantly improved by depositing the AZO layer (MF) on the Ag layer. In comparative example 4, the hardness of the film layer is not significantly improved by depositing the ZrOₓ layer (MF) on the Ag layer. In comparative examples 5 and 6, the hardness of the film layer is significantly improved by depositing the ZrOₓ layer (MF) on the Ag layer, and the hardness of the film layer may even be improved up to 8H.

Compared with comparative examples 1 to 6, the target power in each of embodiments 1 to 12 is the HiPIMS power, which may further improve the hardness of the film layer to greater than 9H. Obviously, the ZrOₓ layer (HiPIMS) has a higher single-layer hardness than the DLC layer, the AZO layer, and even the ZrOₓ layer (MF). The ZrOₓ layer (HiPIMS) is more favorable for use in the innermost adhesive layer, the first intermediate layer, the second intermediate layer, the third intermediate layer, and the outermost protective layer of the coated structure 200.

In general, the duty ratio of the MF magnetron sputtering power is basically 100%, which means that the MF magnetron sputtering power continuously acts on the target material. The duty ratio of the HiPIMS power ranges from 5% to 17%, which means that the HiPIMS power acts on the target material for a shorter duration. When depositing the same material under the same process conditions, the sputtering rate of the HiPIMS power is usually lower than the sputtering rate of the MF magnetron sputtering power. However, as seen in comparative examples 4 to 6 and embodiments 1 to 12, the reverse situation occurs in the ZrOₓ material. The reason is that the ZrOₓ material has poor conductivity and is difficult to be ionized. Therefore, the target material is difficult to be fully ionized by the MF magnetron sputtering power, and problems such as unstable voltage, sparking on the target material, and serious alarm of arcing may occur. In embodiments 1 to 12, the HiPIMS power is used to deposit the ZrOₓ layer, and the sputtering rate is increased by 21.9% to 68% compared with comparative examples 4 to 6, in which the MF magnetron sputtering power is used to deposit the ZrOₓ layer. The increase of the sputtering rate is beneficial for the application of material, and significantly reduces the costs for chamber space, cathode, and power required by the application of material.

As shown in table 1, the refractive index *n* of the ZrOₓ layer (MF) deposited using the MF magnetron sputtering power is greater than 2.2, and the extinction coefficient k of the ZrOₓ layer (MF) deposited using the MF magnetron sputtering power is greater than 0.001. The ZrOₓ layer (HiPIMS) deposited using the HiPIMS power has a lower refractive index *n* = 2.00 - 2.18, more specifically *n* = 2.06 - 2.12, and an even lower extinction coefficient *k* ≤ 0.0001, or even *k* ≤ 0.00005. That is, depositing the ZrOₓ layer (HiPIMS) using the HiPIMS power changes the density of the ZrOₓ layer (HiPIMS), which in turn changes the refractive index *n* and the extinction coefficient k of the ZrOₓ layer (HiPIMS), thereby expanding the application range of the ZrOₓ layer (HiPIMS). As can be seen, using the ZrOₓ layer (HiPIMS) in the coated structure 200 not only improves the film hardness of the coated structure 200, but also improves the scratch resistance and the workability of the coated glass. Moreover, it is more beneficial for the design of the coating system and the adjustment of optical performances of the coated structure 200, such as transmittance, reflectivity, and absorptivity for lights with different wavelengths.

Comparative examples 7 to 10 and embodiments 13 to 16 are described in the following.

In the disclosure, clear glass substrates with the thickness of 2.1mm are prepared, and the coated structures 200 of comparative examples 7 to 10 and embodiments 13 to 16 are respectively deposited on the surfaces of the clear glass substrates through magnetron sputtering. The coated structures 200 each includes three functional stacked layers, specifically including the innermost adhesive layer 210, the first functional stacked layer 220, the first intermediate layer 260, the second functional stacked layer 230, the second intermediate layer 270, the third functional stacked layer 240, and the outermost protective layer 290 stacked in sequence. At least one of the innermost adhesive layer 210, the first intermediate layer 260, the second intermediate layer 270, or the outermost protective layer 290 includes the ZrOₓ layer (HiPIMS).

The coated structures 200 of comparative examples 7 to 10 are measured in terms of sheet resistance *R*, pencil hardness, and results of alcohol scrubbing experiment before and after high-temperature heat treatment, and the measurement results are shown in table 2.

**Table 2: measurement results of coated glass 1001 of comparative examples 7 to 10**

| | | Comparative example 7 | | Comparative example 8 | | Comparative example 9 | | Comparative example 10 | |
|---|---|---|---|---|---|---|---|---|---|
| | | Material | Physical thickness (nm) | Material | Physical thickness (nm) | Material | Physical thickness (nm) | Material | Physical thickness (nm) |
| Innermost adhesive layer | | ZnSnOₓ | 30.3 | ZnSnOₓ | 30.3 | ZnSnOₓ | 30.3 | ZnSnOₓ | 30.3 |
| First functional stacked layer | First dielectric layer | AZO | 16.5 | AZO | 16.5 | AZO | 16.5 | AZO | 16.5 |
| | First metal layer | Ag | 11.8 | Ag | 11.8 | Ag | 11.8 | Ag | 11.8 |
| | Second dielectric layer | AZO | 12.8 | AZO | 12.8 | AZO | 12.8 | AZO | 12.8 |
| First intermediate layer | | ZnSnOₓ | 53.7 | ZnSnOₓ | 53.7 | ZnSnOₓ | 53.7 | ZnSnOₓ | 53.7 |
| Second functional stacked layer | Third dielectric layer | AZO | 12.8 | AZO | 12.8 | AZO | 12.8 | AZO | 12.8 |
| | Second metal layer | Ag | 15 | Ag | 15 | Ag | 15 | Ag | 15 |
| | Fourth dielectric layer | AZO | 12.8 | AZO | 12.8 | AZO | 12.8 | AZO | 12.8 |
| Second intermediate layer | | ZnSnOₓ | 47.8 | ZnSnOₓ | 47.8 | ZnSnOₓ | 47.8 | ZnSnOₓ | 47.8 |
| Third functional stacked layer | Fifth dielectric layer | AZO | 12.8 | AZO | 12.8 | AZO | 12.8 | AZO | 12.8 |
| | Third metal layer | Ag | 14.1 | Ag | 14.1 | Ag | 14.1 | Ag | 14.1 |
| | Sixth dielectri c layer | AZO | 10 | AZO | 10 | AZO | 10 | AZO | 10 |
| Outermost protective layer | | TiOₓ | 4.9 | TiOₓ | 4.9 | TiOₓ | 4.9 | TiOₓ | 4.9 |
| | | ZnSnOₓ | 5.4 | ZnSnOₓ | 5.4 | ZnSnOₓ | 5.4 | ZnSnOₓ | 5.4 |
| | | ZrOₓ ( MF) | 13.4 | SiNₓ | 16.9 | SiZrNₓ | 13.8 | SiZrOₓ | 33.1 |
| Before high-temperatu re heat treatment | Sheet resistan ce *R* | 1.19 Ω/□ | | 1.28Ω/□ | | 1.24Ω/□ | | 1.26Ω/□ | |
| | Pencil hardness | 8H | | 3H | | 5H | | 7H | |
| | Alcohol scrubbing | No peeling after 50 times of scrubbing | | No peeling after 50 times of scrubbing | | No peeling after 50 times of scrubbing | | No peeling after 50 times of scrubbing | |
| After high-temperatu re heat treatment | Sheet resistan ce *R* | 0.99Ω/□ | | 1.05Ω/□ | | 1.03Ω/□ | | 1.04Ω/□ | |
| | Pencil hardness | 9H | | 4H | | 3H | | 6H | |
| | Alcohol scrubbing | No peeling after 50 times of scrubbing | | No peeling after 50 times of scrubbing | | No peeling after 50 times of scrubbing | | No peeling after 50 times of scrubbing | |

The coated structures 200 of embodiments 13 to 16 are measured in terms of sheet resistance *R*, pencil hardness, and results of alcohol scrubbing experiment before and after high-temperature heat treatment, and the measurement results are shown in table 3.

**Table 3: measurement results of coated glass 1001 of embodiments 13 to 16**

| | | Embodiment 13 | | Embodiment 14 | | Embodiment 15 | | Embodiment 16 | |
|---|---|---|---|---|---|---|---|---|---|
| | | Material | Physical thickness (nm) | Material | Physical thickness (nm) | Material | Physical thickness (nm) | Material | Physical thickness (nm) |
| Innermost adhesive layer | | ZnSnOₓ | 30.3 | SiNₓ | 26.8 | ZrOₓ (HiPIMS) | 30.3 | ZrOₓ (HiPIMS) | 30.3 |
| First functional stacked layer | First dielectric layer | AZO | 16.5 | AZO | 16.5 | AZO | 16.5 | AZO | 16.5 |
| | First metal layer | Ag | 11.8 | Ag | 11.8 | Ag | 11.8 | Ag | 11.8 |
| | Second dielectric layer | AZO | 12.8 | AZO | 12.8 | AZO | 12.8 | AZO | 12.8 |
| First intermediate layer | | ZnSnOₓ | 53.7 | ZrOₓ (HiPIMS ) | 53.7 | SiNₓ | 53.7 | ZrOₓ (HiPIM S) | 53.7 |
| Second functional stacked layer | Third dielectric layer | AZO | 12.8 | AZO | 12.8 | AZO | 12.8 | AZO | 12.8 |
| | Second metal layer | Ag | 15 | Ag | 15 | Ag | 15 | Ag | 15 |
| | Fourth dielectric layer | AZO | 12.8 | AZO | 12.8 | AZO | 12.8 | AZO | 12.8 |
| Second intermediate layer | | ZnSnOₓ | 47.8 | ZrOₓ (HiPIMS ) | 47.8 | SiNₓ | 47.8 | ZrOₓ (HiPIM S) | 47.8 |
| Third functional stacked layer | Fifth dielectric layer | AZO | 12.8 | AZO | 12.8 | AZO | 12.8 | AZO | 12.8 |
| | Third metal layer | Ag | 14.1 | Ag | 14.1 | Ag | 14.1 | Ag | 14.1 |
| | Sixth dielectric layer | AZO | 10 | AZO | 10 | AZO | 10 | AZO | 10 |
| Outermost protective layer | | TiOₓ | 4.9 | TiOₓ | 4.9 | TiOₓ | 4.9 | TiOₓ | 4.9 |
| | | ZnSnOₓ | 5.4 | ZnSnOₓ | 5.4 | ZnSnOₓ | 5.4 | ZnSnOₓ | 5.4 |
| | | ZrOₓ (HiPIM S) | 14.2 | SiNₓ | 16.9 | ZrOₓ (HiPIMS ) | 14.2 | ZrOₓ (HiPIM S) | 14.2 |
| Before high-temperatu re heat treatment | Sheet resistan ce *R* | 1.25Ω/□ | | 1.29Ω/□ | | 1.26Ω/□ | | 1.29Ω/□ | |
| | Pencil hardnes s | >9H | | >9H | | >9H | | >9H | |
| | Alcohol scrubbin g | No peeling after 50 times of scrubbing | | No peeling after 50 times of scrubbing | | No peeling after 50 times of scrubbing | | No peeling after 50 times of scrubbing | |
| After high-temperatu re heat treatment | Sheet resistan ce *R* | 1.03Ω/□ | | 1.06Ω/□ | | 1.04Ω/□ | | 1.06Ω/□ | |
| | Pencil hardnes s | >9H | | >9H | | >9H | | >9H | |
| | Alcohol scrubbin g | No peeling after 50 times of scrubbing | | No peeling after 50 times of scrubbing | | No peeling after 50 times of scrubbing | | No peeling after 50 times of scrubbing | |

As shown in table 2, the comparative examples 7 to 10 have the same innermost adhesive layer 210, first functional stacked layer 220, first intermediate layer 260, second functional stacked layer 230, second intermediate layer 270, and third functional stacked layer 240 in the coated structure 200, with only the outermost protective layer 290 being different. Specifically, in comparative example 7, the MF magnetron sputtering power is used to deposit the ZrOₓ layer (n = 2.26) as the sub-film layer of the outermost protective layer 290 farthest from the first substrate 100, where the pencil hardness of the coated structure 200 is 8H before high-temperature heat treatment and 9H after high-temperature heat treatment. In comparative example 8, the MF magnetron sputtering power is used to deposit the SiNₓ layer (n = 2.13) as the sub-film layer of the outermost protective layer 290 farthest from the first substrate 100, where the pencil hardness of the coated structure 200 is 3H before high-temperature heat treatment and 4H after high-temperature heat treatment. In comparative example 9, the MF magnetron sputtering power is used to deposit the SiZrNₓ layer (n = 2.17) as the sub-film layer of the outermost protective layer 290 farthest from the first substrate 100, where the pencil hardness of the coated structure 200 is 5H before high-temperature heat treatment and 3H after high-temperature heat treatment. In comparative example 10, the MF magnetron sputtering power is used to deposit the SiZrOₓ layer (n = 1.59) as the sub-film layer of the outermost protective layer 290 farthest from the first substrate 100, where the pencil hardness of the coated structure 200 is 7H before high-temperature heat treatment and 6H after high-temperature heat treatment. As can be seen, the coated structures 200 of comparative examples 1 to 4 each shows a decrease in sheet resistance *R* after high-temperature heat treatment, and each satisfies the requirements for alcohol scrubbing experiment before and after high-temperature heat treatment, which indicates that the design of the coating system of the coated structure 200 is reasonable. However, the coated structures 200 of comparative examples 3 and 4 each shows a decrease in sheet resistance after high-temperature heat treatment, which indicates that the outermost protective layers of comparative examples 3 and 4 do not meet the requirements for processes such as self-weight bending or press bending when manufacturing the vehicle glass. The coated structure 200 of comparative example 2 has a pencil hardness of 4H after high-temperature heat treatment, which is still a low pencil hardness, making it prone to being scratched by hard objects during transportation, storage, handling, and processing, leading to poor workability.

As shown in table 3, in comparative example 13, the HiPIMS power is used to deposit the ZrOₓ layer (n = 2.10) as the sub-film layer of the outermost protective layer 290 farthest from the first substrate 100, where the pencil hardness of the coated structure 200 is greater than 9H before high-temperature heat treatment and greater than 9H after high-temperature heat treatment.

Compared with comparative examples 7 to 10, the pencil hardness before high-temperature heat treatment of the coated structure 200 of embodiment 13 is greater than the pencil hardness before high-temperature heat treatment of the coated structures 200 of comparative examples 7 to 10, which indicates that before high-temperature heat treatment, the coated structure 200 of embodiment 13 has a hardness satisfying the requirement for manufacturing at different places. In comparative example 14, the HiPIMS power is used to deposit the ZrOₓ layer (n = 2.08) as the first intermediate layer and the second intermediate layer, where the pencil hardness of the coated structure 200 is greater than 9H before high-temperature heat treatment and greater than 9H after high-temperature heat treatment. In comparative example 15, the HiPIMS power is used to deposit the ZrOₓ layer (n = 2.09) as the innermost adhesive layer 210; the HiPIMS power is used to deposit the ZrOₓ layer (n = 2.10) as the sub-film layer of the outermost protective layer 290 farthest from the first substrate 100, where the pencil hardness of the coated structure 200 is greater than 9H before high-temperature heat treatment and greater than 9H after high-temperature heat treatment. In comparative example 16, the HiPIMS power is used to deposit the ZrOₓ layer (n = 2.09) as the innermost adhesive layer 210; the HiPIMS power is used to deposit the ZrOₓ layer (n = 2.08) as the first intermediate layer and the second intermediate layer; the HiPIMS power is used to deposit the ZrOₓ layer (n = 2.10) as the sub-film layer of the outermost protective layer 290 farthest from the first substrate 100, where the pencil hardness of the coated structure 200 is greater than 9H before high-temperature heat treatment and greater than 9H after high-temperature heat treatment.

In table 3, the coated structures 200 of embodiments 13 to 16 each has a sheet resistance *R* less than or equal to 1.1Ω/□ after high-temperature heat treatment, and each satisfies the requirements for alcohol scrubbing experiment before and after high-temperature heat treatment. Furthermore, the coated structures 200 of embodiments 13 to 16 each has a pencil hardness greater than 9H before and after high-temperature heat treatment. It demonstrates that the use of the HiPIMS power can accelerate the ionization of the ZrO_{y} ceramic target to improve the sputtering rate, and the prepared ZrOₓ layer may possess advantages such as dense structure, smooth surface, etc. In this way, the hardness of the coated structure is improved, the scratch resistance and workability of the coated glass with the coated structures 200 of embodiments 13 to 16 are improved, and the coated structures 200 may be prevented from being scratched by hard objects during subsequent transportation, storage, handling, and processing, thereby satisfying the requirement for manufacturing at different places.

Comparative examples 11 to 12 and embodiments 17 to 20 are described in the following.

In the disclosure, clear glass substrates with the thickness of 2.1mm are prepared, and the coated structures 200 of comparative examples 11 and 12 and embodiments 17 to 20 are respectively deposited on the surfaces of the clear glass substrates through magnetron sputtering. The coated structures 200 each includes four functional stacked layers, specifically including the innermost adhesive layer 210, the first functional stacked layer 220, the first intermediate layer 260, the second functional stacked layer 230, the second intermediate layer 270, the third functional stacked layer 240, the third intermediate layer 280, the fourth functional stacked layer 250, and the outermost protective layer 290 stacked in sequence. At least one of the innermost adhesive layer 210, the first intermediate layer 260, the second intermediate layer 270, the third intermediate layer 280, or the outermost protective layer 290 includes the ZrOₓ layer (HiPIMS).

The coated structures 200 of comparative examples 11 and 12 and embodiment 17 are measured in terms of sheet resistance *R*, pencil hardness, and results of alcohol scrubbing experiment before and after high-temperature heat treatment, and the measurement results are shown in table 4.

**Table 4: measurement results of coated glass 1001 of comparative examples 11 and 12 and embodiment 17**

| | | Comparative example 11 | | Comparative example 12 | | Embodiment 17 | |
|---|---|---|---|---|---|---|---|
| | | Material | Physical thickness (nm) | Material | Physical thickness (nm) | Material | Physical thickness (nm) |
| Innermost adhesive layer | | ZnSnOₓ | 26 | ZnSnOₓ | 26 | ZnSnOₓ | 26 |
| First functional stacked layer | First dielectric layer | AZO | 12.8 | AZO | 12.8 | AZO | 12.8 |
| | First metal layer | Ag | 9.1 | Ag | 9.1 | Ag | 9.1 |
| | Second dielectric layer | AZO | 12.8 | AZO | 12.8 | AZO | 12.8 |
| First intermediate layer | | ZnSnOₓ | 55.4 | ZnSnOₓ | 55.4 | ZnSnOₓ | 55.4 |
| Second functional stacked layer | Third dielectric layer | AZO | 12.8 | AZO | 12.8 | AZO | 12.8 |
| | Second metal layer | Ag | 11.6 | Ag | 11.6 | Ag | 11.6 |
| | Fourth dielectric layer | AZO | 12.8 | AZO | 12.8 | AZO | 12.8 |
| Second intermediate layer | | ZnSnOₓ | 43.3 | ZnSnOₓ | 43.3 | ZnSnOₓ | 43.3 |
| Third functional stacked layer | Fifth dielectric layer | AZO | 12.8 | AZO | 12.8 | AZO | 12.8 |
| | Third metal layer | Ag | 13 | Ag | 13 | Ag | 13 |
| | Sixth dielectric layer | AZO | 12.8 | AZO | 12.8 | AZO | 12.8 |
| Third intermediate layer | | ZnSnOₓ | 53.4 | ZnSnOₓ | 53.4 | ZnSnOₓ | 53.4 |
| Fourth functional stacked layer | Seventh dielectric layer | AZO | 12.8 | AZO | 12.8 | AZO | 12.8 |
| | Fourth dielectric layer | Ag | 14.2 | Ag | 14.2 | Ag | 14.2 |
| | Eighth dielectric layer | AZO | 12.8 | AZO | 12.8 | AZO | 12.8 |
| Outermost protective layer | | TiOₓ | 4.9 | TiOₓ | 4.9 | TiOₓ | 4.9 |
| | | ZnSnOₓ | 8.1 | ZnSnOₓ | 8.1 | ZnSnOₓ | 8.1 |
| | | SiZrNₓ | 13 | ZrOₓ (MF) | 12.5 | ZrOₓ (HiPIM S) | 13.3 |
| Before high-temperature heat treatment | Sheet resistance *R* | 1.01Q/o | | 1.02Ω/□ | | 1.03Ω/□ | |
| | Pencil hardness | 5H | | 8H | | >9H | |
| | Alcohol scrubbing | No peeling after 50 times of scrubbing | | No peeling after 50 times of scrubbing | | No peeling after 50 times of scrubbing | |
| After high-temperature heat treatment | Sheet resistance *R* | 0.82Ω/□ | | 0.84Ω/□ | | 0.84Ω/□ | |
| | Pencil hardness | 6H | | 8H | | >9H | |
| | Alcohol scrubbing | No peeling after 50 times of scrubbing | | No peeling after 50 times of scrubbing | | No peeling after 50 times of scrubbing | |

The coated structures 200 of embodiments 18 to 20 are measured in terms of sheet resistance *R*, pencil hardness, and results of alcohol scrubbing experiment before and after high-temperature heat treatment, and the measurement results are shown in table 5.

**Table 5: measurement result of coated glass 1001 of embodiments 18 to 20**

| | | Embodiment 18 | | Embodiment 19 | | Embodiment 20 | |
|---|---|---|---|---|---|---|---|
| | | Material | Physical thickness (nm) | Material | Physical thicknes s (nm) | Material | Physical thicknes s (nm) |
| Innermost adhesive layer | | ZnSnOₓ | 26 | ZrOₓ (HiPIM S) | 26 | ZrOₓ (HiPIM S) | 26 |
| First functional stacked layer | First dielectri c layer | AZO | 12.8 | AZO | 12.8 | AZO | 12.8 |
| | First metal layer | Ag | 9.1 | Ag | 9.1 | Ag | 9.1 |
| | Second dielectri c layer | AZO | 12.8 | AZO | 12.8 | AZO | 12.8 |
| First intermediate layer | | ZrOₓ (HiPIM S) | 55.4 | SiNₓ | 53.1 | ZrOₓ (HiPIM S) | 55.4 |
| Second functional stacked layer | Third dielectri c layer | AZO | 12.8 | ZnAlOₓ | 12.8 | AZO | 12.8 |
| | Second metal layer | Ag | 11.6 | Ag | 11.6 | Ag | 11.6 |
| | Fourth dielectri c layer | AZO | 12.8 | AZO | 12.8 | AZO | 12.8 |
| Second intermediate layer | | ZrOₓ (HiPIM S) | 43.3 | SiNₓ | 40.9 | ZrOₓ (HiPIM S) | 43.3 |
| Third functional stacked layer | Fifth dielectri c layer | AZO | 12.8 | ZnAlOₓ | 12.8 | AZO | 12.8 |
| | Third metal layer | Ag | 13 | Ag | 13 | Ag | 13 |
| | Sixth dielectric layer | AZO | 12.8 | AZO | 12.8 | AZO | 12.8 |
| Third intermediate layer | | ZrOₓ (HiPIM S) | 53.4 | SiNₓ | 51.2 | ZrOₓ (HiPIM S) | 53.4 |
| Fourth functional stacked layer | Seventh dielectric layer | AZO | 12.8 | AZO | 12.8 | AZO | 12.8 |
| | Fourth dielectric layer | Ag | 14.2 | Ag | 14.2 | Ag | 14.2 |
| | Eighth dielectric layer | AZO | 12.8 | AZO | 12.8 | AZO | 12.8 |
| Outermost protective layer | | TiOₓ | 4.9 | TiOₓ | 4.9 | TiOₓ | 4.9 |
| | | / | / | ZnSnOₓ | 8.1 | ZnSnOₓ | 8.1 |
| | | SiZrNₓ | 23.7 | ZrOₓ (HiPIM S) | 13.3 | ZrOₓ (HiPIM S) | 13.3 |
| Before high-temperatu re heat treatment | Sheet resistan ce *R* | 1.08Ω/□ | | 1.11Ω/□ | | 1.09Ω/□ | |
| | Pencil hardnes s | >9H | | >9H | | >9H | |
| | Alcohol scrubbin g | No peeling after 50 times of scrubbing | | No peeling after 50 times of scrubbing | | No peeling after 50 times of scrubbing | |
| After high-temperature heat treatment | Sheet resistance *R* | 0.87Ω/□ | | 0.89Ω/□ | | 0.87Ω/□ | |
| | Pencil hardness | >9H | | >9H | | >9H | |
| | Alcohol scrubbing | No peeling after 50 times of scrubbing | | No peeling after 50 times of scrubbing | | No peeling after 50 times of scrubbing | |

As shown in table 4 and table 5, the measurement results may be summarized as follows.

In comparative example 11, the MF magnetron sputtering power is used to deposit the SiZrNₓ layer (n = 2.17) as the sub-film layer of the outermost protective layer 290 farthest from the first substrate 100, where the pencil hardness of the coated structure 200 is 5H before high-temperature heat treatment and 6H after high-temperature heat treatment.

In comparative example 12, the MF magnetron sputtering power is used to deposit the ZrOₓ layer (n = 2.26) as the sub-film layer of the outermost protective layer 290 farthest from the first substrate 100, where the pencil hardness of the coated structure 200 is 8H before high-temperature heat treatment and 8H after high-temperature heat treatment.

In embodiment 17, the HiPIMS power is used to deposit the ZrOₓ layer (n = 2.10) as the sub-film layer of the outermost protective layer 290 farthest from the first substrate 100, where the pencil hardness of the coated structure 200 is greater than 9H before high-temperature heat treatment and greater than 9H after high-temperature heat treatment.

In embodiment 18, the HiPIMS power is used to deposit the ZrOₓ layer (n = 2.08) as the first intermediate layer and the second intermediate layer, where the pencil hardness of the coated structure 200 is greater than 9H before high-temperature heat treatment and greater than 9H after high-temperature heat treatment.

In embodiment 19, the HiPIMS power is used to deposit the ZrOₓ layer (n = 2.09) as the innermost adhesive layer 210; the HiPIMS power is used to deposit the ZrOₓ layer (n = 2.10) as the sub-film layer of the outermost protective layer 290 farthest from the first substrate 100, where the pencil hardness of the coated structure 200 is greater than 9H before high-temperature heat treatment and greater than 9H after high-temperature heat treatment.

In embodiment 20, the HiPIMS power is used to deposit the ZrOₓ layer (n = 2.09) as the innermost adhesive layer 210; the HiPIMS power is used to deposit the ZrOₓ layer (n = 2.08) as the first intermediate layer and the second intermediate layer; the HiPIMS power is used to deposit the ZrOₓ layer (n = 2.10) as the sub-film layer of the outermost protective layer 290 farthest from the first substrate 100, where the pencil hardness of the coated structure 200 is greater than 9H before high-temperature heat treatment and greater than 9H after high-temperature heat treatment.

Compared with comparative examples 11 and 12, the pencil hardness before high-temperature heat treatment of the coated structures 200 of embodiment 17 to 20 is greater than the pencil hardness before high-temperature heat treatment of the coated structures 200 of comparative examples 11 and 12, which indicates that before high-temperature heat treatment, the coated structures 200 of embodiments 17 to 20 each has a hardness satisfying the requirement for manufacturing at different places.

In table 4 and table 5, the coated structures 200 of embodiments 17 to 20 each has a sheet resistance *R* less than or equal to 0.9Ω/□ after high-temperature heat treatment, and each satisfies the requirements of alcohol scrubbing experiment before and after high-temperature heat treatment. Furthermore, the coated structures 200 of embodiments 17 to 20 each has the pencil hardness greater than 9H before and after high-temperature heat treatment. It demonstrates that the use of the HiPIMS power can accelerate the ionization of the ZrO_{y} ceramic target to increase the sputtering rate, and the prepared ZrOₓ layer may possess advantages such as dense structure, smooth surface, etc. In this way, the hardness of the coated structure is improved, the scratch resistance and workability of the coated glass with the coated structures 200 of embodiments 17 to 20 are improved, and the coated structures 200 may be prevented from being scratched by hard objects during subsequent transportation, storage, handling, and processing, thereby satisfying the requirement for manufacturing at different places.

Detailed description is made above to the embodiments of the disclosure. Detailed examples are applied to illustrate the principles and embodiments of the disclosure. The descriptions of the above embodiments are only used to help understand the methods and core ideas of the disclosure. Meanwhile, based on the idea of the disclosure, those of ordinary skills in the art may make some changes in embodiments and the scope of the disclosure. In conclusion, the contents of this specification should not be construed as limitations of the disclosure.

## Claims

1. A coated glass, comprising:
a first substrate; and
a coated structure, wherein the coated structure is disposed on at least one surface of the first substrate, and the coated structure comprises at least one functional stacked layer and at least one ZrOₓ layer; and each functional stacked layer comprises a metal layer and two dielectric layers, the metal layer is located between the two dielectric layers, and a ZrOₓ layer is located on one side of a dielectric layer away from the metal layer, wherein x satisfies 1 < x ≤ 2, and a refractive index *n* of each of the at least one ZrOₓ layer satisfies 2.00 ≤ *n* ≤ 2.18.

2. The coated glass of claim 1, wherein a pencil hardness of the coated structure is greater than or equal to 9H.

3. The coated glass of claim 1, wherein a material of the metal layer is selected from any one metal or any one metal alloy of silver (Ag), aurum (Au), copper (Cu), aluminum (Al), or platinum (Pt), and a physical thickness of the metal layer ranges from 5nm to 20nm.

4. The coated glass of claim 1, wherein a material of the dielectric layer is selected from any one metal or any one metal alloy oxide of zinc (Zn), magnesium (Mg), tin (Sn), titanium (Ti), niobium (Nb), zirconium (Zr), nickel (Ni), indium (In), aluminum (Al), cerium (Ce), tungsten (W), molybdenum (Mo), antimony (Sb), bismuth (Bi), and a physical thickness of the dielectric layer ranges from 5nm to 30nm.

5. The coated glass of claim 1, wherein the coated structure comprises an innermost adhesive layer, a first functional stacked layer, and an outermost protective layer stacked in sequence, and at least one of the innermost adhesive layer or the outermost protective layer comprises the ZrOₓ layer.

6. The coated glass of claim 1, wherein the coated structure comprises an innermost adhesive layer, a first functional stacked layer, a first intermediate layer, a second functional stacked layer, and an outermost protective layer stacked in sequence, and at least one of the innermost adhesive layer, the first intermediate layer, or the outermost protective layer comprises the ZrOₓ layer.

7. The coated glass of claim 1, wherein the coated structure comprises an innermost adhesive layer, a first functional stacked layer, a first intermediate layer, a second functional stacked layer, a second intermediate layer, a third functional stacked layer, and an outermost protective layer stacked in sequence, and at least one of the innermost adhesive layer, the first intermediate layer, the second intermediate layer, or the outermost protective layer comprises the ZrOₓ layer.

8. The coated glass of claim 1, wherein the coated structure comprises an innermost adhesive layer, a first functional stacked layer, a first intermediate layer, a second functional stacked layer, a second intermediate layer, a third functional stacked layer, a third intermediate layer, a fourth functional stacked layer, and an outermost protective layer stacked in sequence, and at least one of the innermost adhesive layer, the first intermediate layer, the second intermediate layer, the third intermediate layer, or the outermost protective layer comprises the ZrOₓ layer.

9. The coated glass of any one of claims 5 to 8, wherein the innermost adhesive layer comprises the ZrOₓ layer with a physical thickness ranging from 10nm to 40nm.

10. The coated glass of any one of claims 5 to 8, wherein the outermost protective layer comprises the ZrOₓ layer with a physical thickness ranging from 5nm to 35nm.

11. The coated glass of any one of claims 6 to 8, wherein at least one of the first intermediate layer, the second intermediate layer, or the third intermediate layer comprises the ZrOₓ layer with a physical thickness ranging from 30nm to 70nm.

12. The coated glass of any one of claims 5 to 8, wherein a specific structure of the outermost protective layer is: TiOₓ layer/ZnSnOₓ layer/ZrOₓ layer.

13. The coated glass of claim 1, wherein an extinction coefficient k of the ZrOₓ layer is less than or equal to 0.0001.

14. A laminated glass, comprising a second substrate, an adhesive layer, and the coated glass of any one of claims 1 to 13, wherein the adhesive layer is connected between the second substrate and the coated glass, and the coated structure is located between the first substrate and the second substrate.

15. The laminated glass of claim 14, wherein the first substrate is clear glass or ultra-clear glass, a total iron content of the clear glass is less than or equal to 0.1%, and a visible light transmittance of the clear glass is greater than or equal to 80%; and a total iron content of the ultra-clear glass is less than or equal to 0.015%, and a visible light transmittance of the ultra-clear glass is greater than or equal to 90%.

16. A manufacturing method for a coated glass, comprising:
providing a first substrate;
forming a coated structure on at least one surface of the first substrate through magnetron sputtering; wherein
the coated structure comprises at least one functional stacked layer and at least one ZrOₓ layer; and each functional stacked layer comprises a metal layer and two dielectric layers, the metal layer is located between the two dielectric layers, and any of the at least one ZrOₓ layer is located on one side of a dielectric layer away from the metal layer, wherein x satisfies 1 < x ≤ 2, and a refractive index *n* of each of the at least one ZrOₓ layer satisfies 2.00 ≤ *n* ≤ 2.18.

17. The manufacturing method of claim 16, wherein a target power for magnetron sputtering the ZrOₓ layer is a high power impulse magnetron sputtering (HiPIMS) power, and a target material for magnetron sputtering the ZrOₓ layer is a ZrO_{y} ceramic target, wherein y satisfies 1.4 ≤ y < 2.
